# EUROPEAN PATENT APPLICATION

(11) **EP 2 634 599 A1**
(43) Date of publication of application: **04.09.2013**
(21) Application number: 12290068.1
(22) Date of filing: 29.02.2012
(51) Int. Cl.: G01S 19/22, G01S 19/28, G01S 19/42, G01S 19/06, G01S 19/25

(54) **Satellite positioning using a sky-occlusion map**

(71) Applicant: NXP B.V., 5656 AE Eindhoven (NL)
(72) Inventor: Le Pifre, Pierre, 5656 AG Eindhoven (NL)
(74) Representative: Schouten, Marcus Maria

(57) **Abstract**

A method of determining the location of a satellite-positioning receiver (130). The method comprises: obtaining (200) an approximate location of the receiver; determining (210) a part of the sky that is occluded at the approximate location, wherein the determination is made using map data (140) describing obstacles which occlude parts of the sky, at a plurality of locations; identifying (220) a plurality of satellites that are visible in a non-occluded portion of the sky at the approximate location; and calculating (230) the location of the receiver using signals received from those identified satellites.

## Description

This invention relates to satellite positioning systems. It is particularly relevant to the use of satellite positioning in complex signal environments, such as urban areas with tall buildings.

Global Navigation Satellite Systems (GNSS) are well known in the art. One prominent example is the Global Positioning System (GPS). The principle underlying such satellite navigation systems is to provide a constellation of satellites orbiting the earth in predetermined orbits. Each satellite transmits a unique signal and all of the satellites are synchronized to a common time-reference. The time taken for signals to travel from each satellite to a receiver device depends primarily upon the distance between the receiver and the satellite. Therefore, at any given time instant, the relative geometry of the satellites and receiver can be determined by knowing the time of flight of signals from each satellite to the receiver.

To establish its position, the receiver receives signals from several satellites, and compares their relative times of arrival. These provide "pseudoranges" between the receiver and the respective satellites. They are not uniquely determined ranges, because the receiver does not, in general, know the time when the signals were transmitted by the satellites, in absolute terms. Therefore, it can only determine relative ranges of the various satellites.

The pseudoranges are combined with knowledge of the satellite positions to allow the receiver to calculate its own position. With pseudoranges from three satellites, the receiver can solve the geometry to determine its position in three dimensions (if absolute timing is known). With four pseudoranges, the receiver can also establish the absolute time reference used by the satellites.

The positions of the satellites can be obtained from a variety of sources. Each satellite transmits a data message comprising "almanac" and "ephemeris" data. The almanac describes the approximate orbits of all satellites. The ephemeris describes the precise orbit of the particular satellite transmitting this data. Therefore, satellite positions can be obtained by decoding the almanac and/or ephemeris.

The GNSS receiver may also be helped by terrestrial services. An assistance server may provide extra information to help reduce the computational burden at the satellite positioning receiver; help it to calculate a position fix faster; or help it to calculate a position fix in poor signal conditions. Assistance may be provided using a terrestrial cellular network, for example. The assistance data may include, for example:
● An estimated (approximate) location of the receiver device, inferred from the identity of one or more cellular base-stations with which the device is communicating. This estimate may be accurate to within 100m. Having an initial estimate of its location can enable the receiver to lock on to the satellite signals faster, because it can predict their timing to some extent and thereby avoid an exhaustive search.
● Ephemeris or almanac information, to avoid the need for the receiver device to decode the satellite data message (which is relatively low bitrate and therefore slow).

The difficulties encountered when calculating the location of a satellite positioning receiver are also well known. Two related problems are the occlusion of satellites by obstacles and reflection of signals off obstacles (multi-path). The first problem reduces the number of satellites whose signals can be examined and exploited by the receiver to determine its position. The second problem can cause a satellite signal to be received via an indirect path. This means that the distance between the satellite and receiver is no longer correlated with the time of flight of the signals, which introduces error into the geometrical calculations. Reflections can cause multiple versions of the same signal to be received at the receiver.

In some cases, a satellite signal may be affected by both problems: the direct signal is completely blocked by an obstacle, such that it is undetectable at the receiver. Meanwhile, the signal is reflected from another obstacle and arrives at the receiver with an additional (unknown) delay. In this case it can be difficult or impossible for the receiver to realize that the received signal is in fact a reflection. However, if the reflected signal is used to calculate the location of the receiver, an unknown error may be introduced.

According to an aspect of the present invention, there is provided a method of determining the location of a satellite-positioning receiver, comprising:
obtaining an approximate location of the receiver;
determining a part of the sky that is occluded at the approximate location, wherein the determination is made using a geographical map describing obstacles which occlude parts of the sky, at a plurality of locations;
identifying a plurality of satellites that are visible in a non-occluded portion of the sky at the approximate location; and
calculating the location of the receiver using signals received from those identified satellites.

The present inventors have recognized that it would be desirable to deduce when satellite signals have been obstructed and then to deliberately exclude those satellites from the positioning calculations. This should help to avoid accidentally including in the calculations signals which are in fact reflected versions.

The present inventors have further recognized that this can be achieved using a map which provides data about the obstacles causing obstruction of satellite signals at various locations. For a given estimated location, the map allows the portion of sky that is visible - and conversely, the portion of sky that is obscured from view - to be determined. This information can then be combined with knowledge of the satellite positions at a given instant in time, to deduce the satellites which should be visible, and those which are predicted to be occluded behind obstacles. Based on the assumption that any signal detected from such a satellite is likely to be a reflection, these signals are then excluded from the subsequent geometric calculation of the receiver's location. Thus, only those satellites which are identified as being in a visible (non-occluded) portion of the sky should be used in the calculation. By selecting satellites in this way, the accuracy of the positioning system may be improved, by eliminating sources of error.

In the present context, "visible" means that there is a line of sight between the receiver and the satellite which is not occluded by an obstacle.

The step of identifying the plurality of visible satellites may comprise comparing the positions (at a given time instant) of the satellites in the sky with those parts of the sky that were determined to be occluded.

Note that the map data does not necessarily comprise a visual representation. Rather, the information may be stored in tabular or database form.

The map optionally describes the height and location of obstacles which can occlude the sky.

This is one way to organise the map data. In such an embodiment, the map effectively comprises a database of obstacles, each with a record of its location and height. This offers a compact data representation. The occlusion of the sky at any given location can be derived from this data by searching the map/database for obstacles near to the location of interest. The azimuthal (compass) direction of each obstacle relative to the candidate location can be determined by comparing their respective geographic coordinates. Likewise, the angle of elevation below which the sky is obscured by the obstacle can be determined by comparing the height of the obstacle with the distance between the obstacle-location and the candidate-location. The map-database may further comprise other dimensions of the obstacle, such as its area footprint (in plan view), or its length, width, or orientation. In some embodiments, the map-database may comprise an elevation map of the obstacle. This would describe the height of different parts of the obstacle and their shape in plan view. Such a description could be provided by a map-image, for example, wherein the value at each pixel in the image reflects the height of the obstacle at the corresponding position in the real world. This could be used to calculate the "shadow" cast by the object more accurately.

The obstacles may be any type of object that is substantially opaque to the satellite signals, including but not limited to buildings, mountains, and canyons.

Alternatively, the map may describe, for each of a plurality of locations, an angle of elevation below which the sky is occluded at that location.

This provides an alternative way to organise the map data. This structure may result in a larger volume of data than storing a database of obstacles; however, it can avoid the need to perform calculations in order to determine the visible portion of sky (as summarised above), since this information is already stored explicitly in the database.

Preferably, the map further describes an angle of azimuth or range of angles of azimuth, associated with the angle of elevation.

The map preferably describes occlusions with a resolution that varies according to location.

More detailed information may be desirable at some locations. In this example, the spatial resolution of the map data is variable. Here, spatial resolution may be defined, for example, as the number of obstacles stored in the map per unit area. Alternatively, spatial resolution could be defined by a resolution of azimuth and elevation angles which describe the occluded portions of sky when viewed from a given location.

The map may provide increased resolution in at least one region where the occlusion varies rapidly with changes in location.

Increased resolution is needed in more complex occlusion environments. Here, small changes in location may significantly change the portions of sky that are visible. For example, travelling around the corner of a building can rotate a 180° portion of sky that is visible (respectively, hidden) by 90° azimuthal angle.

In particular, the map may provide increased resolution in an urban area, as compared with a rural area.

Complex occlusions are more likely to be encountered in urban environments, so it is desirable to provide more accurate information about occlusions in these areas.

The approximate location may be provided by a satellite navigation assistance provider.

For example, an approximate location based on cellular positioning may be provided by an Enhanced GPS service.

The approximate location may also be calculated using signals received from any available satellites.

In such an embodiment, all available satellite signals (or an arbitrary subset of the available signals) are used to calculate an initial estimate of location. This is then used as a seed for determining sky-occlusion. Once sky-occlusion at the estimated location has been determined, the satellites that are predicted to be occluded are eliminated from the satellite positioning calculations.

The method may further comprise iterating the steps of the method, using the calculated location as the approximate location for the next iteration.

The method takes an approximate location as input and outputs a (potentially more accurate) calculated location. This process can be iterated, with the calculated location being used to determine the occlusions in the next iteration. This should result in a calculated location that converges with each iteration to an accurate result.

The method may further comprise, before the step of determining the occluded part of the sky, obtaining the geographical map.

The map may be downloaded in whole or in part from a server and/or stored in a memory of the receiver. If stored in the memory of the receiver, the map may be updated from a server at intervals. For example, the map may be updated by a new portion transmitted from the server when the receiver enters a geographical region for the first time. Alternatively or in addition, the receiver may receive periodic updates from the map server.

Also provided is a computer program comprising computer program code means adapted to control a satellite positioning receiver to perform all the steps of any preceding claim when said program is run. Further provided is such a computer program embodied on a computer readable medium.

According to another aspect of the invention, there is provided a navigation device comprising:
a pproximate location determination means, operable to obtain an approximate location of the device;
a n occlusion manager, adapted to:
   determine a part of the sky that is occluded at the approximate location, the determination being made using a geographical map describing parts of the sky that are occluded from view at each of a plurality of locations; and
   identify a plurality of satellites of a satellite-positioning constellation that are visible in a non-occluded portion of the sky at the approximate location; and
   a satellite positioning subsystem, adapted to calculate the location of the receiver using signals received from those satellites identified by the occlusion manager.

The approximate location determination means optionally comprises the satellite positioning subsystem, which subsystem is adapted to: receive signals from satellites in the satellite positioning constellation; calculate the approximate location of the device using the received satellite signals; and output the calculated approximate location, together with information describing the position of each satellite whose signals were used in the calculation, and wherein the occlusion manager is further adapted to: receive the location of the device and the information describing satellite positions, from the satellite positioning subsystem; and control the satellite positioning subsystem to calculate the location of the device using only the identified plurality of visible satellites.

The invention will now be described by way of example with reference to the accompanying drawings, in which:
Fig. 1 is a schematic illustration of the multi-path problem;
Fig. 2 is a block diagram showing the sources of information for a GPS receiver wishing to calculate its position, according to a first embodiment of the invention;
Fig. 3 is a flowchart illustrating a method according to the embodiment;
Fig. 4 is an example of a sky occlusion map according to an embodiment of the invention; and
Fig. 5 is a schematic block diagram of a navigation device according to an embodiment.

In the following description, the example of GPS will be used throughout. However, those skilled in the art will readily appreciate that the invention can equally be used with other GNSSs, including but not limited to GLONASS and Galileo.

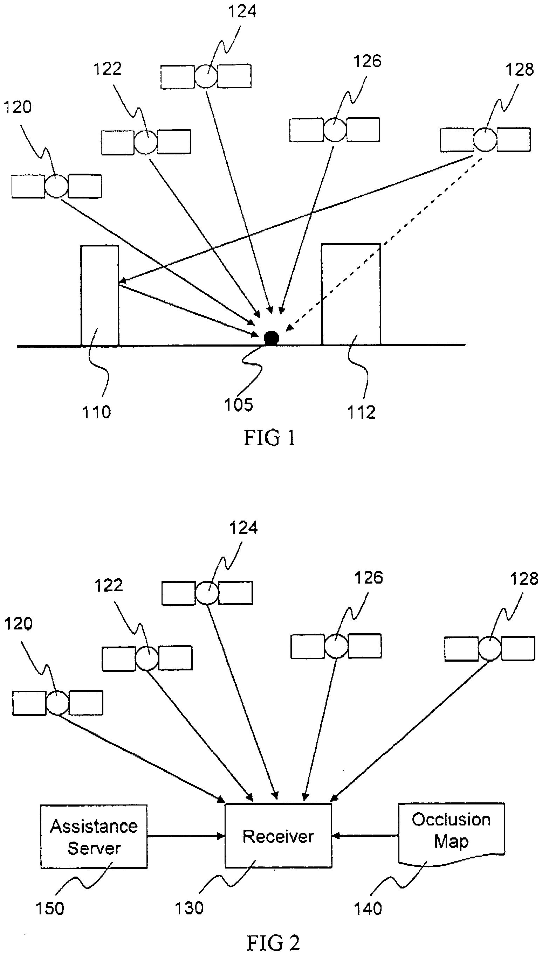

Fig. 1 illustrates the problems of occlusion and reflection of satellite signals. A user with a GPS receiver is located at point 105, between two tall buildings 110 and 112. At this location 105, four satellites 120, 122, 124, and 126 are directly visible to the receiver. Here "visibility" means that an electromagnetic wave can pass from the satellite to the receiver in a substantially straight line, directly without any reflections.

The direct path from a further satellite 128 to the receiver at location 105 is obstructed by building 112. This occluded path is indicated by the dashed line in Fig. 1. Meanwhile, an indirect signal path exists due to reflection of the signal from satellite 128 off building 110. In the case that the direct path is completely blocked by the building 112, the reflected signal will be the only signal that the receiver at location 105 receives from satellite 128. In other cases, the direct signal might only be partially attenuated. In this case, the receiver will receive two versions of the signal: via the direct and indirect paths. This is the "multi-path" case. In either case, the receiver is able to detect the signals transmitted by all five satellites 120-128 and decode the data message modulated on those signals. It may be difficult or impossible for the receiver to determine that the signal being received from the fifth satellite 128 is in fact an indirect reflection.

It would be preferable to eliminate uncertainty by calculating the location of the receiver using only the signals received from satellites 120-126. This will eliminate the potentially erroneous signal from satellite 128.

According to an embodiment of the invention, satellite 128 is eliminated from the calculation by deducing that it is occluded by building 112. Fig. 2 shows the sources of information used to make this deduction, according to an embodiment of the invention. As shown in Fig. 2, receiver 130 receives satellite signals (directly) from satellites 120-126 and receives the reflected (and therefore time-delayed) signal from satellite 128. The receiver 130 has access to an occlusion map 140. This map comprises a description of the visibility of the sky at different locations. The contents of the map will be described in greater detail below. The receiver 130 is also able to communicate with an assistance server 150. This provides the receiver 130 with an estimate of its current location - for example, using a cellular positioning solution (such as is known in the art). In this example, the receiver communicates with the assistance server via a wireless cellular data connection and can obtain the occlusion map via the same connection. Note that the approximate location supplied by the assistance server 150 will typically be less accurate than a location calculated by satellite positioning techniques.

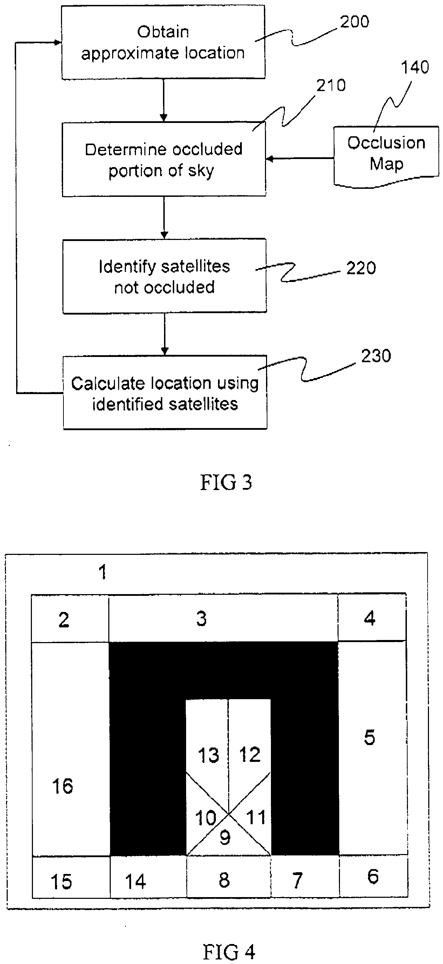

Fig. 3 illustrates a method according to the present embodiment of the invention. In step 200, the receiver 130 obtains its approximate location from the assistance server 150. In step 210, the receiver 130, using the approximate location, consults the occlusion map 140. The receiver 130 retrieves from the map information about the portion of sky that is occluded (and conversely, the portion of sky that is visible) at the approximate location. The receiver also has information about the orbital trajectories of the satellites 120-128. This may be almanac or ephemeris data, which has been obtained by decoding the satellite data messages or provided by the assistance server 150. In step 220, the receiver 130 determines the positions of the satellites at the current time and compares these positions with the occluded portion of sky determined in step 210. This enables the receiver to identify those satellites which are occluded from view and those not occluded. In step 230, the receiver 130 uses only those satellites identified as visible to calculate its location. Thus, the steps 200, 210, and 220 enable the receiver 130 to select the best set of satellites to use in the location calculation step 230. The positioning algorithm used to calculate the location in step 230 may be of a conventional type. The calculated location can then be used in a subsequent iteration of the process, wherein the previous calculated location is used as the approximate location for the next iteration.

The map representation according to the present embodiment will now be described in greater detail, with reference to Fig. 4. This shows a plan view of the area around an obstacle such as a building (shown in black). In this example, the height of the obstacle determines the elevation-angle above which the sky can be seen in a particular direction, The occlusion map of Fig. 4 describes a plurality of areas, labelled 1-16, around an obstacle. Table 1 shows the information stored in association with each of the 16 areas of the map. In the present embodiment, the approximate location provided by the assistance server 150 is used to determine in which one of the 16 areas the receiver is (approximately) located. This is then used to access the relevant row of the table and thereby determine the portion of the sky which is visible.

| ***Area*** | ***Keep satellites if conditions below are TRUE** (Azimuth: 0° = North; Elevation: 0° = horizon)* |
|---|---|
| *1* | *Keep all* |
| 2 | *azimuth NOT in [90°, 180°]* |
| 3 | *azimuth NOT in [90°, 270°]* |
| 4 | *azimuth NOT in [180°, 270°]* |
| 5 | *azimuth NOT in [180°, 360°]* |
| 6 | *azimuth NOT in [270°, 360°]* |
| 7 | *azimuth NOT in [270°, 90°]* |
| 8 | *Azimuth in [90°, 270°]* |
| | *OR (azimuth in [345°, 15°] AND elevation > 45°)* |
| 9 | *azimuth in [135°, 225*°*]* |
| | *OR (azimuth in [345°, 15°] AND elevation > 45°)* |
| *10* | *Azimuth in [135°, 180°]* |
| | *OR (azimuth in [45°, 90°] AND elevation > 60°)* |
| | *OR (azimuth in [0°, 45°] AND elevation > 45°)* |
| 11 | *Azimuth in [180°, 225°]* |
| | *OR (azimuth in [225°, 315°] AND elevation > 60°)* |
| | *OR (azimuth in [315°, 360°] AND elevation > 45°)* |
| 12 | *Azimuth in [180°,270°] AND elevation > 45°* |
| *13* | *azimuth in [90°, 180°] AND elevation > 45°* |
| *14* | *azimuth in [90°, 270°]* |
| *15* | *azimuth in [90°, 360°]* |
| 16 | *azimuth in [180°, 360°]* |

The conditions in the rows of the table can be specified in terms of azimuth, elevation, or both. For example, if the approximate location of the receiver lies in area 2, satellite signals will be used in the calculation provided that the azimuth of the respective satellites is not in the range 90° to 180° (that is, not in the quadrant between east and south). Meanwhile, for an approximate location in area 12, the satellite azimuth must be in the range 180° to 270° and the elevation must be greater than 45° in order for the signals of that satellite to be used.

Note that the resolution of the map is not uniform. The space is divided into areas of different size. For example, in areas 9-13, where the propagation environment is particularly complex, there is a greater density of sub-divisions. Meanwhile, in area 16, a single set of conditions is applied to a larger range of locations. This can be achieved if the map is divided into areas (for example, blocks) of approximately equal obstacle-density. That is, the number of obstacles affecting each block is approximately uniform.

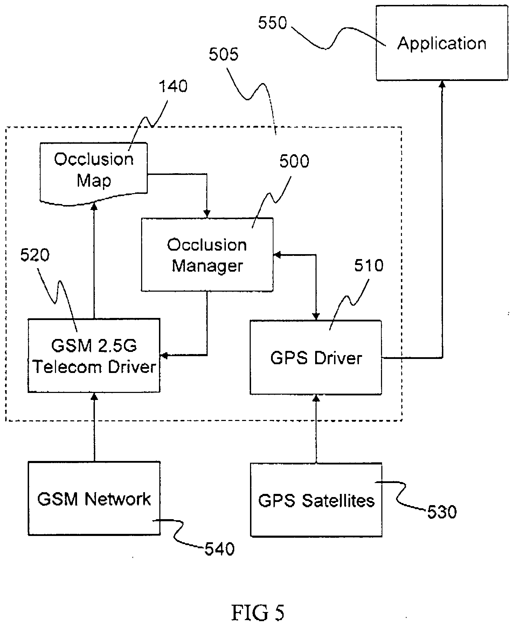

Fig. 5 shows a block diagram of the internal structure of a navigation device 505 according to an embodiment of the invention. In this embodiment, the occlusion map 140 is stored in an on-board memory of the navigation device 505. The device also incorporates an occlusion manager 500 operable to control the various other components of the device. It also includes a GPS driver 510 and a GSM driver 520. The GPS driver 510 receives satellite signals from GPS satellites 530. The GSM driver is in communication with a GSM cellular network 540. The GPS driver 510 is operable to provide a calculated location to an application 550 which has requested a navigation function. The GPS driver 510 and GSM driver 520 may be of a similar construction and function to those already known in the art. Therefore, they will not be described in any further detail.

For the embodiment of Fig. 5, it is assumed that the approximate location of the navigation device 505 is obtained by satellite positioning. That is, the GPS driver 510 calculates an approximate location of the device 505, using GPS signals from all available satellites 530 (that is, all satellites whose signals are receivable). This may include reflected signals and therefore the approximate position may be inaccurate. The occlusion manager 500 obtains this approximate location from the GPS driver 510, along with the list of satellites that were used to compute the location and their current azimuth and elevation angles. It is known for GPS receiver hardware to provide this information as part of its output. The occlusion manager 500 uses the approximate location to locate the navigation device 505 on the occlusion map 140. Based on the occlusion information retrieved from the occlusion map, the occlusion manager 500 determines which of the satellites (if any) need to be excluded from the location calculation, because they are predicted to be occluded by obstacles at the approximate location. The occlusion manager 500 supplies the list of valid satellites to the GPS driver 510 and instructs it to calculate the location of the device 505 using only these satellites. The GPS driver 510 calculates the location accordingly and outputs this to the application 550 via an application interface.

The occlusion map 140 is updated using the GSM network 540 via the GSM driver 520. It may only be necessary to download a small portion of the map from the GSM network for each location calculation. That is, a small region of the map, in the neighbourhood of the approximate location can be requested and obtained from the GSM network in real time during the execution of the method.

In other embodiments, the occlusion map could be stored fully embedded in the navigation device 505. In this case, access to the GSM network 540 via the driver 520 may be unnecessary. However, it may also be desirable to update the map periodically over time, as obstacles and the occlusions they create change - for example, as buildings are constructed or demolished.

While the invention has been illustrated and described in detail in the drawings and foregoing description, such illustration and description are to be considered illustrative or exemplary and not restrictive; the invention is not limited to the disclosed embodiments.

For example, it is possible to operate an embodiment of the invention in which the occlusion-map data is stored in a different representation. In particular, the map may be "obstacle-centric", wherein the data comprises the location and size (for example, height) of the obstacle. In order to determine the sky-occlusions at any given location, the occlusion manager 500 can search the map for obstacles within a predetermined range of its approximate location. It can then compare the approximate location with the location of each retrieved obstacle. The height of the obstacle and its displacement from the approximate location can be converted into angles of azimuth and elevation, which can be used as described previously above, to establish the satellites which are visible and occluded, respectively.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method of determining the location of a satellite-positioning receiver (130),
comprising:
obtaining (200) an approximate location of the receiver;
determining (210) a part of the sky that is occluded at the approximate location, wherein the determination is made using map data (140) describing obstacles which occlude parts of the sky, at a plurality of locations;
identifying (220) a plurality of satellites that are visible in a non-occluded portion of the sky at the approximate location; and
calculating (230) the location of the receiver using signals received from those identified satellites.

2. The method of claim 1, wherein the map data (140) describes the height and location of obstacles which can occlude the sky.

3. The method of claim 1, wherein the map data (140) describes, for each of a plurality of locations, an angle of elevation below which the sky is occluded at that location.

4. The method of claim 3, wherein the map data further describes an angle of azimuth or range of angles of azimuth, associated with the angle of elevation.

5. The method of any preceding claim, wherein the map data describes obstacles with a resolution that varies according to location.

6. The method of claim 5, wherein the map data provides increased resolution in at least one region where the occlusion varies rapidly with changes in location.

7. The method of claim 6, wherein the map data provides increased resolution in an urban area, as compared with a rural area.

8. The method of any preceding claim, wherein the approximate location is provided by a satellite navigation assistance provider (150).

9. The method of any of claims 1 to 7, wherein the approximate location is calculated using signals received from any available satellites.

10. The method of any preceding claim, further comprising iterating the steps of the method, using the calculated location as the approximate location for the next iteration.

11. The method of any preceding claim, further comprising, before the step of determining the occluded part of the sky, obtaining the map data (140).

12. A computer program comprising computer program code means adapted to control a satellite positioning receiver to perform all the steps of any preceding claim when said program is run.

13. A computer program as claimed in claim 12 embodied on a computer readable medium.

14. A navigation device comprising:
approximate location determination means (510), operable to obtain an approximate location of the device;
an occlusion manager (500), adapted to:
determine a part of the sky that is occluded at the approximate location, the determination being made using map data (140) describing obstacles which occlude parts of the sky at each of a plurality of locations; and
identify a plurality of satellites of a satellite-positioning constellation that are visible in a non-occluded portion of the sky at the approximate location; and
a satellite positioning subsystem (510), adapted to calculate the location of the receiver using signals received from those satellites identified by the occlusion manager.

15. The navigation device of claim 14, wherein the approximate location determination means comprises the satellite positioning subsystem (510), which subsystem is adapted to:
receive signals from satellites (530) in the satellite positioning constellation;
calculate the approximate location of the device using the received satellite signals; and
output the calculated approximate location, together with information describing the position of each satellite whose signals were used in the calculation,
and wherein the occlusion manager (500) is further adapted to:
receive the location of the device and the information describing satellite positions, from the satellite positioning subsystem (510); and
control the satellite positioning subsystem (510) to calculate the location of the device using only the identified plurality of visible satellites.
